# EUROPEAN PATENT SPECIFICATION

(11) **EP 2 803 049 B1**
(45) Date of publication and mention of the grant of the patent: **14.12.2016**
(21) Application number: 13735670.5
(22) Date of filing: 09.01.2013
(51) Int. Cl.: G05B 23/02, G07C 5/08

(54) **SYSTEM AND METHOD FOR PROVIDING DIAGNOSTIC FAULT INFORMATION**
SYSTEM UND VERFAHREN ZUR BEREITSTELLUNG DIAGNOSTISCHER FEHLERINFORMATION
SYSTÈME ET PROCÉDÉ POUR FOURNIR DES INFORMATIONS DE DIAGNOSTIC DE PANNES

(30) Priority: 13.01.2012 SE 1250017
(43) Date of publication of application: 19.11.2014
(73) Proprietor: Scania CV AB, 151 87 Södertälje (SE)
(72) Inventor: BITEUS, Jonas, S-155 30 Nykvarn (SE); NYBERG, Mattias, S-125 57 Älvsjö (SE); IVENDAL, Hans, S-117 26 Stockholm (SE)
(74) Representative: Scania CV AB
(86) International application number: PCT/SE2013/050007
(87) International publication number: WO 2013/105892

(56) References cited:
- US-A1- 2008 155 384
- US-A1- 2009 006 476
- US-A1- 2011 225 096
- US-A1- 2011 246 018
- US-A1- 2011 276 219
- US-B1- 6 782 313

## Description

### BACKGROUND TO THE INVENTION AND PRIOR ART

The present invention relates generally to the identification and rectification of faults in motor vehicles. The invention relates in particular to a system according to the preamble of claim 1 and a method according to the preamble of claim 7. It relates also to a computer programme according to claim 13 and a computer-readable medium according to claim 14.

Modern motor vehicles are very complex technical systems supervised by automatic functions. In for example heavy vehicles, e.g. trucks and buses, a unit or group of units is usually controlled by means of electronic control units (ECUs) which are connected to the units via a communication bus. Any faults in each of the vehicle's components and units may thereby be detected via respective ECUs which look after them. Faults detected in the course of troubleshooting are reported to a central location in the form of standardised fault codes, e.g. DTCs *(diagnostic trouble codes).*

There are today various solutions for troubleshooting and diagnosis of motor vehicles. DE 10 2007 010 978 A1 for example describes a technical solution for fault diagnosis whereby a Bayesian network defines the cause and effect relationship between components and fault events. An evaluation unit evaluates the Bayesian network and determines a dependency value for the fault in each component. The evaluation unit generates a list of faulty components which is sorted on the basis of the dependency value. A user, e.g. a repairer, is provided with the list via an output unit.

US 2009/0006476 refers to an experience-based (case *based*) system for processing of vehicle diagnostic data with the object of identifying remedial measures deemed likely to rectify faults detected in a vehicle. The processing is conducted remotely, away from the vehicle, and involves ranking the identified remedial measures by matching in a database of previously received diagnostic data and associated remedial measures. The remedial measure associated with the highest ranking combination of diagnostic data is regarded as being the most likely to solve the fault detected. The most likely remedial measure is reproduced on a vehicle repair database, resulting in the extraction of a corresponding repair procedure for the most likely remedial measure.

EP 1 895 377 A1 refers to a fault diagnosis solution for a complex system comprising a plurality of components each regarded as potentially being in any of the states of health described as "normal", "suspected faulty" or "confirmed faulty". On the basis of the results of tests, minimal conflicts which clarify the test results are identified. A respective readiness status is derived which indicates a definitive value or a non-definitive value depending on whether or not further testing of a component is expected to alter its state of health. In the case of a non-definitive value, future minimal conflicts are identified which express every combination of potentially faulty components which is consistent with a current range of minimal conflicts. The minimal conflicts serve as a basis for determining the further tests which might potentially produce results such as to cause said readiness status to change to the definitive value for one or more of the components. A status report is generated after evaluation of at least one of the further tests. Reliable diagnoses may thus also be arrived at for very complex systems, e.g. modern motor vehicles. It is also possible in a given situation to decide whether continued testing is sensible or not.

### PROBLEMS ASSOCIATED WITH PRIOR ART

A problem which has nevertheless yet to be solved is that the descriptions, e.g. so-called system reactions, produced for respective standardised fault codes are static. They therefore do not represent with complete certainty a correct system description if an ECU has subsequently been parameterised, since such parameterisation may alter the vehicle's corresponding system reactions.

Another problem is that said system descriptions are arrived at during the construction of the vehicle in parallel with the development of the software which controls the behaviour of the ECUs. Future updating of the software in an ECU involves risk of the relating system description not being adjusted appropriately, in which case it may well become misleading, e.g. as regards the system reaction.

### SUMMARY OF THE INVENTION

The object of the present invention is therefore to propose a solution which solves the above problems and provides reliable diagnostic fault information.

One aspect of the invention achieves the object by the system described in the introduction being provided with a first database and a second database. The first database contains a range of information items, and a certain information item describes how the control unit which originated a given fault code reacts when that fault code has been generated. The second database comprises data derived directly from said respective softwares in the control units. A first proposed processing unit is configured to generate diagnostic fault information concerning a certain fault code received, dynamically on the basis of the content of the first and second databases.

This system is advantageous in automatically accommodating any software updates and/or parameterisations after the vehicle's commissioning. The quality of the information presented concerning a certain fault code may thus be high, since this information is directly based on the software which originated the current fault code.

In one embodiment of this aspect of the invention, the system comprises a second processing unit configured to search through said data in the second database. The second processing unit is further configured to use the results of the search as a basis for generating secondary text information describing the function of at least one software in the vehicle. Appropriate text information is thus achieved in an uncomplicated and reliable way. In another embodiment of the invention, it is possible, as a variant to integrating the second processing unit in the proposed system, for it to be located outside the system (with advantage in the form of a central resource usable for more than one system). In this case the second processing unit generates beforehand the secondary text information for all of the fault codes arising, and all of the secondary information generated beforehand is stored in an alternative second database in the system.

In another embodiment of this aspect of the invention, the second processing unit is configured to search through the second database and generate the secondary text information in response to a fault code received. The fact that the content of the second database corresponds to the vehicle's software thus provides assurance that the diagnostic fault information is appropriate.

In yet another embodiment of this aspect of the invention, the information items in the first database primarily comprise text information which describes for each of the fault codes how the control unit which originated the fault code reacts when that fault code has been generated. The first processing unit is further configured to respond to a fault code received by combining primary text information concerning the fault code received with secondary text information concerning the fault code received, thus compiling resulting text information which describes the fault code received. The diagnostic fault information is thus provided in an uncomplicated and reliable way.

In a further embodiment of this aspect of the invention, the system comprises a third database provided with at least one additional detail concerning a replacement component of the vehicle. The replacement component is here regarded as being controlled by a control unit which is adapted to controlling an original component with characteristics which differ from those of the replacement component with respect to at least one parameter. If a fault code received concerns said replacement component, the first processing unit is configured to generate diagnostic fault information concerning the fault code received, on the further basis of said at least one additional detail from the third database. This is advantageous in that the additional details allow easy adjustment to any deviating characteristics of substitute components in the vehicle.

In yet another embodiment of this aspect of the invention, the first processing unit is configured to receive a user command pointing out a certain fault code received, e.g. by marking of the fault code on a screen. In response, the first processing unit is further configured to dynamically generate the diagnostic fault information concerning the fault code pointed out. A user is thus provided with an intuitive interface for interaction with the proposed system.

Another aspect of the invention achieves the object by the method described in the introduction which further comprises receiving from a first database at least one information item describing how the control unit which originated a fault code received reacts when that fault code has been generated. The method comprises also receiving from a second database information representing the software which implements the control unit which has generated the fault code received. The method comprises also dynamic generation of diagnostic fault information concerning the fault code received, on the basis of said at least one information item and said information representing the software. The advantages of this method and of its preferred embodiments are indicated by the above discussion with reference to the proposed system.

A further aspect of the invention achieves the object by a computer programme which is directly downloadable to the internal memory of a computer and which comprises software for controlling steps according to the method proposed above when said programme is run on a computer.

Yet another aspect of the invention achieves the object by a computer-readable medium which has stored on it a programme adapted to enabling a computer to control steps according to the method proposed above.

### BRIEF DESCRIPTION OF THE DRAWINGS

The present invention will now be explained in more detail on the basis of embodiments described by way of examples and with reference to the attached drawings.
- Figure 1: is a schematic diagram of a motor vehicle connected to a diagnostic system according to a first embodiment of the invention,
- Figure 2: is a schematic diagram of a motor vehicle connected to a diagnostic system according to a second embodiment of the invention, and
- Figure 3: is a flowchart illustrating the general method according to the invention.

### DESCRIPTION OF EMBODIMENTS OF THE INVENTION

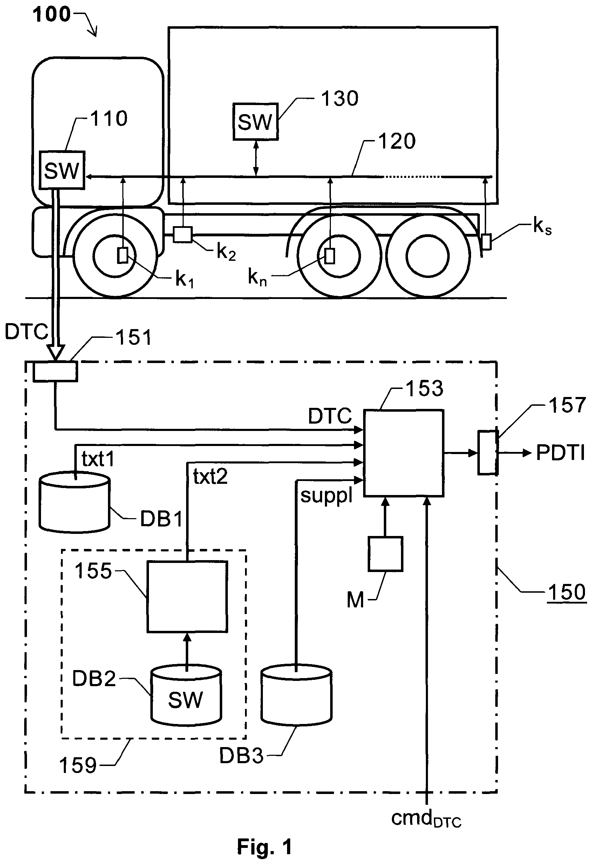

We refer initially to Figure 1 which is a schematic diagram of a motor vehicle 100 connected to a system 150 for provision of diagnostic fault information PDTI according to a first embodiment of the invention.

The vehicle 100 is supposed to comprise a number of components k₁, k₂, ... , kₙ, ..., kₛ. A first control unit 110 is regarded as looking after a first group of components k₁ and k₂. A second control unit 130 is regarded as looking after a second group of components kₙ, ..., kₛ. Communication between components k₁, k₂, ..., kₙ, ..., kₛ and the control units 110 and 130 takes place with advantage across a communication bus 120. The first control unit 110 is regarded as being also equipped with an interface for external data communication, e.g. for conveying fault codes DTC to the proposed system 150.

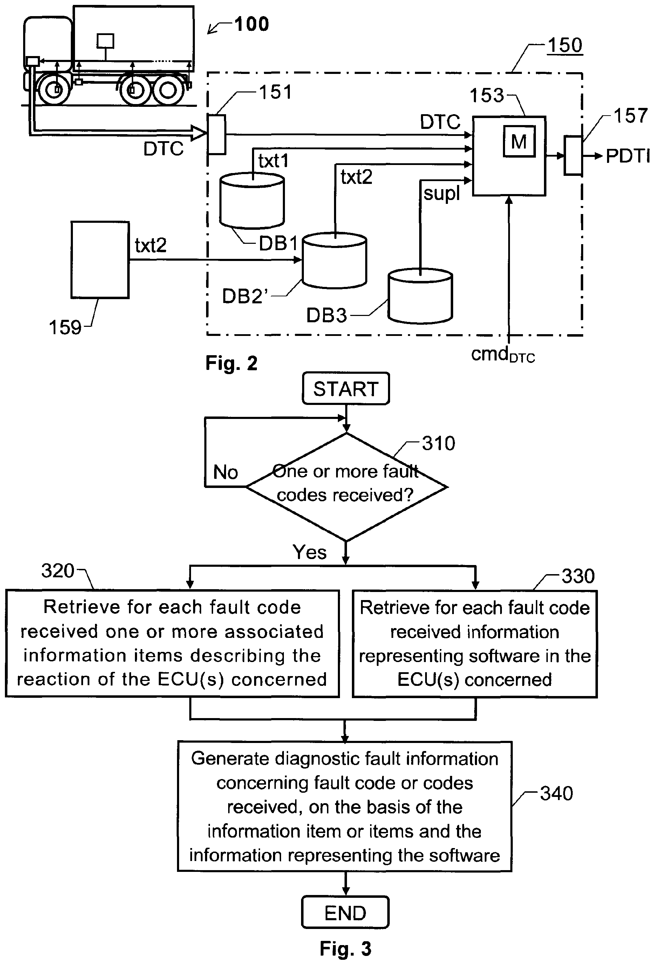

The system 150 comprises a first processing unit 153, a first database DB1 and a second database DB2 (or DB2', see Figure 2).

Fault codes DTC from the vehicle 100 are for example received via an input interface 151 and are conveyed to the first processing unit 153. Each fault code received DTC is associated with a unique identity (e.g. a specific number, a number of characters or a combination thereof) for unambiguous identification. Each fault code DTC is further regarded as being generated by a control unit 110 or 130 with which the vehicle is already provided and whose function is at least partly implemented by a respective software SW.

The first database DB1 comprises a range of information items, and a certain information item describes how the control unit which originated a given fault code DTC reacts when that code has been generated, i.e. a so-called system reaction of the vehicle. The second database DB2 includes data directly derived from the softwares SW.

Either the second database DB2 includes copies of these softwares SW, as illustrated in Figure 1, or the second database DB2' includes text information txt2 derived directly from the softwares SW, as described below with reference to Figure 2.

In any case, the first processing unit 153 is configured to generate diagnostic fault information PDTI concerning a certain fault code received DTC, dynamically on the basis of the content of the first database DB1 and the content of the second database DB2/DB2'. The diagnostic fault information PDTI is then provided via an output interface 157, e.g. for presentation for a user.

In the first embodiment of the invention, the second database DB2 includes copies of the softwares SW with which the vehicle 100 is already provided, and a second processing unit 155 in the system 150 is configured to search through the software copies SW in the second database DB2. With advantage, documentation pertaining to the software copies SW is stored in the second database DB2 by means of a formal language based on XML (*eXtensible Markup Language*) format. The documentation is with advantage placed here with the software SW for a given diagnostic test and comprises corresponding fault codes DTC, a managed system reaction and, where applicable, alternative system reactions plus at least one condition required to enable the system reactions to be valid. For example, a relationship may be expressed as test magnitude X = sensor1 - sensor2 to describe the pressure drop across a component by means of respective pressure sensors at the component's inlet and outlet.

In addition to what is mentioned above, all of the information in database DB2 is with advantage provided with unique identifiers which are consistent with standard translations stored in the second processing unit 155. This enables the second processing unit to use said data in the second database DB2 (e.g. by so-called *parsing*) as a basis for generating secondary text information txt2 which describes the function of the softwares SW in the vehicle.

It is advantageous if the second processing unit 155 is configured to generate the secondary text information txt2 in response to a fault code received DTC or, as described above, on the direct basis of software copies SW in the second database DB2, or by reading out pre-generated secondary text information txt2 from a second database DB2' as depicted in Figure 2.

Figure 2 is a schematic diagram of a motor vehicle 100 connected to a diagnostic system 150 according to a second embodiment of the invention. All reference notations in Figure 2 which correspond to those in Figure 1 indicate the same units, functions and signals as described above with reference to Figure 1. In Figure 2, the broken-line square 159 depicted in Figure 1 which contains the second database DB2 and the second processing unit 155 is represented outside the proposed system 150. The second database DB2 and the second processing unit 155 may therefore serve as a common resource for two or more systems 150, and either this resource is connected to the respective systems 150 via an established connection for continuous/repeated updating of said secondary text information txt2, or this information may be conveyed when necessary to the respective systems 150 (typically including a local data system at a workshop) on a storage medium such as a flash memory, a ROM (read only memory), e.g. a DVD (digital versatile disc) or a hard disc, directly to a database DB2' in the system 150. In both cases the second processing unit 155 is thus located outside the system 150.

In any case, the information items in the first database DB1 comprise with advantage primary text information txt1 which for each of the fault codes DTC describes how the control unit which originated the fault code DTC reacts when that code has been generated. In response to a fault code received DTC, the first processing unit 153 is configured to combine primary text information txt1 from the first database DB1 concerning the fault code received DTC with secondary text information txt2 (directly from the second database DB2' or derived from the second database DB2) concerning the fault code received DTC, and thus compile resulting text information PDTI which describes the fault code received DTC.

In one embodiment of the invention, the system 150 comprises also a third database DB3 which includes at least one additional detail suppl concerning a replacement component kₙ in the vehicle 100. The replacement component kₙ is regarded as being controlled by a control unit in the vehicle which is adapted to controlling an original component with characteristics which differ from those of the replacement component kₙ with respect to at least one parameter. If a fault code received DTC concerns the replacement component kₙ, the first processing unit 153 is configured to generate diagnostic fault information PDTI concerning the fault code received DTC, on the further basis of said at least one additional detail suppl from the third database DB3. Relatively uncomplicated changing of components is thus made possible. By means of the additional detail suppl, it is for example easy for an ambient temperature sensor originally situated in front of the vehicle's radiator to be replaced by an alternative sensor on the cab roof.

For effective user interaction, all fault codes received DTC are presented for a user via a VDU. The first processing unit 153 is configured to receive a user command cmd_{DTC} pointing out a certain fault code received DTC, e.g. by marking of the fault code DTC on the VDU. In response, the first processing unit is further configured to dynamically generate the diagnostic fault information PDTI concerning the fault code pointed out DTC, as described above with reference to Figures 1 and 2.

The diagnostic fault information PDTI presented via the output interface 157 may for example comprise details in the form of fault codes DTC with designations and descriptions, e.g. **"FF01** - Electrical fault in fuel shutoff valve" and **"FF03 -** Short-circuit of fuel shutoff valve to battery voltage". When a first of the fault codes DTC, say FF01, is chosen/marked in a corresponding input interface, the following text information txt1 and txt2 may be presented via the output interface 157: "Detection: *Control unit indicates electrical fault on legs connected to fuel shutoff value";* "Cause: (likely fault) *air*/*fuel pressure sensor (T110) short-circuited to battery voltage,* (less likely fault) *airlfuel pressure sensor (T110) short-circuited to earth";* "Comment": [System reaction] diesel particle filter preventing fuel injection" and "Remedial measure" if air/fuel pressure sensor (T110) short-circuited to battery voltage, *change fuel pressure sensor (T110);* if air/fuel pressure sensor (T110) short-circuited to earth, *change fuel pressure sensor (T110).*

The way described in which the first processing unit 153 and other units and components which form part of the system 150 work is with advantage controlled by software stored in a memory unit M in communicative connection with the first processing unit 153. By way of illustration, this memory unit M in the first embodiment of the invention (in Figure 1) is arranged outside the first processing unit, whereas that in the second embodiment of the invention (in Figure 2) it is co-located with the first processing unit. According to the invention the specific location of the memory unit M relative to the first processing unit does of course make no difference at all to its function.

To summarise, the general method according to the invention will now be described with reference to the flowchart in Figure 3.

A first step 310 investigates whether the system 150 has received one or more fault codes DTC from a connected vehicle 100. If such is not the case, the method goes back and stays at step 310 to continue investigating whether at least one fault code DTC has been received. If on the contrary at least one fault code has been received, the method moves on to step 320.

Step 320 retrieves (from the first database DB1) an information item which is associated with each fault code received DTC and which describes a reaction of a respective control unit ECU in the vehicle. A step 330 which is with advantage executed in parallel with step 320 retrieves (from the second database DB2/DB2') data directly derived from softwares in the control units concerned.

Thereafter, a step 340 generates diagnostic fault information PDTI concerning the one or more fault codes received, dynamically on the basis of the one or more information items retrieved at step 320 and said data derived at step 330, whereupon the method ends.

The method steps described with reference to Figure 3 may be controlled by means of a programmed computer apparatus. In addition, although the embodiments of the invention described above with reference to the drawings comprise a computer and processes conducted in a computer, the invention extends to computer programmes, particularly computer programmes on or in a support suited to practical implementation of the invention. The programme may be in the form of source code, object code, a code which is intermediate between source and object code, e.g. in partly compiled form, or in any other form suitable for use in implementing the process according to the invention. The support may be any entity or device capable of carrying the programme. It may for example comprise a storage medium such as a flash memory, a ROM (read only memory), e.g. a CD (compact disc) or a semiconductor ROM, EPROM (electrically programmable ROM), EEPROM (erasable EPROM), or a magnetic recording medium, e.g. a floppy disc or hard disc. It may also be a transmitting support such as an electrical or optical signal which can be conveyed through an electrical or optical cable or via radio or in some other way. Where the programme takes the form of a signal which can be conveyed directly by a cable or some other device or means, the support may take the form of such a cable, device or means. Alternatively, the support may be an integrated circuit in which the programme is embedded, in which case the integrated circuit is adapted to conducting, or being used in the conducting of, the respective processes.

The invention is not restricted to the embodiments described with reference to the drawings but may be varied freely within the scope of the claims set out below.

## Claims

1. A system for providing via an output interface (157) diagnostic fault information (PDTI) concerning a motor vehicle (100), which system comprises a first processing unit (153) configured to receive fault codes (DTC) from the vehicle (100), each fault code received (DTC) being associated with a unique identity and being generated by a control unit (110, 130) with which the vehicle (100) is already provided and whose function is at least partly implemented by a respective software (SW), **characterised in that**
the system comprises a first database (DB1) comprising a range of information items, in which a certain information item describes how the control unit (110, 130) which originated a given fault code (DTC) reacts when that fault code (DTC) has been generated,
the system comprises a second database (DB2, DB2') including data derived directly from said respective softwares (SW), and
the first processing unit (153) is configured to generate diagnostic fault information (PDTI) concerning a certain fault code received (DTC), dynamically on the basis of the content of the first database (DB1) and the content of the second database (DB2, DB2').

2. The system according to claim 1, comprising a second processing unit (155) configured to search through said data in the second database (DB2, DB2') and to generate on the basis thereof secondary text information (txt2) which describes the function of at least one software (SW) in the vehicle (100).

3. The system according to claim 2, in which the second processing unit (155) is configured to generate the secondary text information (txt2) in response to a fault code received (DTC).

4. The system according to claim 2 or 3, in which the information items in the first database (DB1) comprise primary text information (txt1) which for each of the fault codes (DTC) describes how the control unit (110, 130) which originated the fault code (DTC) reacts when that fault code (DTC) has been generated; and in response to a fault code received (DTC) the first processing unit (153) is configured to combine primary text information (txt1) concerning the fault code received (DTC) with secondary text information (txt2) concerning the fault code received (DTC), and thus compile resulting text information (PDTI) which describes the fault code received (DTC).

5. The system according to any one of the foregoing claims, further comprising a third database (DB3) including at least one additional detail (suppl) concerning a replacement component (kₙ) in the vehicle (100), which replacement component is controlled by a control unit (110, 130) and has characteristics differing from an original component which said control unit (110, 130) is adapted to controlling with respect to at least one parameter, and if in this case a fault code received (DTC) concerns said replacement component (kₙ) the first processing unit (153) is configured to generate diagnostic fault information (PDTI) concerning the fault code received (DTC), on the further basis of said at least one additional detail (suppl) from the third database (DB3).

6. The system according to any one of the foregoing claims, in which the first processing unit (153) is configured
to receive a user command (cmd_{DTC}) pointing out a certain fault code received (DTC), and in response thereto
to dynamically generate the diagnostic fault information (PDTI) concerning the fault code pointed out (DTC).

7. A method for providing via an output interface (157) diagnostic fault information (PDTI) concerning a motor vehicle (100), which method comprises
receiving fault codes (DTC) from the vehicle (100), each fault code received (DTC) being associated with a unique identity and being generated by a control unit (110, 130) with which the vehicle (100) is already provided and whose function is at least partly implemented by a respective software (SW), **characterised by**
receiving from a first database (DB1) at least one information item describing how the control unit (110, 130) which originated a fault code received (DTC) reacts when that fault code (DTC) has been generated,
receiving from a second database (DB2) information representing the software (SW) which implements the control unit (110, 130) which generated the fault code received (DTC), and
generating diagnostic fault information (PDTI) concerning the fault code received (DTC), dynamically on the basis of said at least one information item and said information representing the software (SW).

8. The method according to claim 7, comprising
searching through the software copies (SW) in the second database (DB2) and, on the basis thereof,
generating secondary text information (txt2) describing the function of at least one software copy (SW) which is stored in the second database (DB2).

9. The method according to claim 8, in which searching through said software copies (SW) and generating the secondary text information (txt2) takes place in response to a fault code received (DTC).

10. The method, according to claim 8 or 9, in which the information items in the first database (DB1), comprise primary text information (txt1) which describes for each of the fault codes (DTC) how the control unit (110, 130) which originated the fault code (DTC) reacts when the respective fault code (DTC) has been generated, which method in response to a fault code received (DTC) comprises
combining primary text information (txt1) concerning the fault code received (DTC) with secondary text information (txt2) concerning the fault code received (DTC), and thus compiling resulting text information (PDTI) which describes the fault code received (DTC).

11. The method according to any one of claims 7 to 10, comprising
investigating whether a fault code received (DTC) concerns a replacement component (kₙ) in the vehicle (100), which replacement component is controlled by a control unit (110, 130) and has characteristics differing from an original component which said control unit (110, 130) is adapted to controlling with respect to at least one parameter, which method, if a fault code received (DTC) concerns such a replacement component (kₙ), comprises
receiving from a third database (DB3) at least one additional detail (suppl) concerning the replacement component (kₙ), and
generating diagnostic fault information (PDTI) concerning the fault code received (DTC), on the further basis of said at least one additional detail (suppl).

12. The method according to any one of claims 7 to 11, comprising
receiving a user command (cmd_{DTC}) which points out a certain fault code received (DTC) and, in response thereto,
dynamically generating diagnostic fault information (PDTI) concerning the fault code pointed out (DTC).

13. A computer programme directly downloadable to the internal memory (M) of a computer and comprising software for performing the steps according to any one of claims 7 to 12 when said programme is run on the computer.

14. A computer-readable medium (M) which has stored on it a computer programme according to claim 13.

## Patentansprüche

1. System zum Bereitstellen von diagnostischer Fehlerinformation (PDTI) über eine Ausgangsschnittstelle (157) betreffend ein Kraftfahrzeug (100), wobei das System eine erste Verarbeitungseinheit (153) umfasst, die konfiguriert ist, Fehlercodes (DTC) von dem Fahrzeug (100) zu empfangen, wobei jeder empfangene Fehlercode (DTC) mit einer eindeutigen Identität verknüpft ist und durch eine Steuereinheit (110, 130) erzeugt wird, mit welcher das Fahrzeug (100) bereits versehen ist und wessen Funktion mindestens teilweise durch eine jeweilige Software (SW) implementiert ist, **dadurch gekennzeichnet, dass**
das System eine erste Datenbank (DB1) umfasst, die eine Reihe von Informationselementen umfasst, in welchen ein bestimmtes Informationselement beschreibt, wie die Steuereinheit (110, 130), welche einen gegebenen Fehlercode (DTC) erzeugt, reagiert, wenn der Fehlercode (DTC) erzeugt wurde,
das System eine zweite Datenbank (DB2, DB2') umfasst, die direkt von der jeweiligen Software (SW) abgeleitete Daten umfasst, und
die erste Verarbeitungseinheit (153) konfiguriert ist, diagnostische Fehlerinformation (PDTI) betreffend einen bestimmten empfangenen Fehlercode (DTC) dynamisch auf der Basis des Inhalts der ersten Datenbank (DB1) und dem Inhalt der zweiten Datenbank (DB2, DB2') zu erzeugen.

2. System nach Anspruch 1, umfassend eine zweite Verarbeitungseinheit (155), die konfiguriert ist, die Daten in der zweite Datenbank (DB2, DB2') zu durchsuchen und auf der Basis davon sekundäre Textinformation (txt2) zu erzeugen, welche die Funktion mindestens einer Software (SW) in dem Fahrzeug (100) beschreibt.

3. System nach Anspruch 2, in welchem die zweite Verarbeitungseinheit (155) konfiguriert ist, die sekundäre Textinformation (txt2) als Antwort auf einen empfangenen Fehlercode (DTC) zu erzeugen.

4. System nach Anspruch 2 oder 3, in welchem die Informationselemente in der ersten Datenbank (DB1) primäre Textinformation (txt1) umfasst, welche für jeden der Fehlercodes (DTC) beschreibt, wie die Steuereinheit (110, 130), welche den Fehlercode (DTC) erzeugt, reagiert, wenn der Fehlercode (DTC) erzeugt wurde; und als Antwort auf einen empfangenen Fehlercode (DTC) die erste Verarbeitungseinheit (153) konfiguriert ist, primäre Textinformation (txt1) betreffend den empfangenen Fehlercode (DTC) mit sekundärer Textinformation (txt2) betreffend den empfangenen Fehlercode (DTC) zu kombinieren, und so resultierende Textinformation (PDTI) zu kompilieren, welche den empfangenen Fehlercode (DTC) beschreibt.

5. System nach einem der vorangegangenen Ansprüche, ferner umfassend eine dritte Datenbank (DB3) umfassend mindestens ein zusätzliches Detail (suppl) betreffend eine Ersatzkomponente (kₙ) in dem Fahrzeug (100), wobei die Ersatzkomponente durch eine Steuereinheit (110, 130) gesteuert wird und Charakteristiken aufweist, die von einer originalen Komponente abweichen, wobei die Steuereinheit (110, 130) ausgebildet ist, die originale Komponente in Bezug auf mindestens einen Parameter zu steuern, und wenn in diesem Fall ein empfangener Fehlercode (DTC) die Ersatzkomponente (kₙ) betrifft, die erste Verarbeitungseinheit (153) konfiguriert ist, diagnostische Fehlerinformation (PDTI) betreffend den empfangenen Fehlercode (DTC), auf der zusätzlichen Basis des mindestens einen zusätzlichen Details (suppl) von der dritten Datenbank (DB3) zu erzeugen.

6. System nach einem der vorangegangenen Ansprüche, in welchem die erste Verarbeitungseinheit (153) konfiguriert ist,
einen Benutzerbefehl (cdm_{DTC}) zu empfangen, der einen bestimmten empfangenen Fehlercode (DTC) hervorhebt, und als Antwort darauf
die diagnostische Fehlerinformation (PDTI) betreffend den hervorgehobenen Fehlercode (DTC) dynamisch zu erzeugen.

7. Verfahren zum Bereitstellen von diagnostischer Fehlerinformation (PDTI) über eine Ausgangsschnittstelle (157) betreffend ein Kraftfahrzeug (100), das Verfahren umfassend
Empfangen von Fehlercodes (DTC) von dem Fahrzeug (100), wobei jeder empfangene Fehlercode (DTC) mit einer eindeutigen Identität verknüpft ist und durch eine Steuereinheit (110, 130) erzeugt wird, mit welcher das Fahrzeug (100) bereits versehen ist und wessen Funktion mindestens teilweise durch eine jeweilige Software (SW) implementiert ist,
**gekennzeichnet durch**
Empfangen, von einer ersten Datenbank (DB1), mindestens eines Informationselementes, das beschreibt, wie die Steuereinheit (110, 130), welche einen gegebenen Fehlercode (DTC) erzeugt, reagiert, wenn der Fehlercode (DTC) erzeugt wurde,
Empfangen, von einer zweiten Datenbank (DB2), von Information, die die Software (SW) darstellt, welche die Steuereinheit (110, 130) implementiert, welche den empfangenen Fehlercode (DTC) erzeugt, und
dynamisches Erzeugen diagnostischer Fehlerinformation (PDTI) betreffend den empfangenen Fehlercode (DTC), auf der Basis des mindestens einen Informationselementes und der Information, die die Software (SW) darstellt.

8. Verfahren nach Anspruch 7, umfassend
Durchsuchen der Softwarekopien (SW) in der zweiten Datenbank (DB2), und auf der Basis davon
Erzeugen sekundärer Textinformation (txt2), welche die Funktion mindestens einer Softwarekopie (SW), welche in der zweiten Datenbank (DB2) gespeichert ist, beschreibt.

9. Verfahren nach Anspruch 8, in welchem Durchsuchen der Softwarekopien (SW) und Erzeugen der sekundären Textinformation (txt2) als Antwort auf einen empfangenen Fehlercode (DTC) erfolgt.

10. Verfahren nach Anspruch 8 oder 9, in welchem die Informationselemente in der ersten Datenbank (DB1) primäre Textinformation (txtl) umfasst, welche für jeden der Fehlercodes (DTC) beschreibt, wie die Steuereinheit (110, 130), welche den Fehlercode (DTC) erzeugt, reagiert, wenn der Fehlercode (DTC) erzeugt wurde, wobei das Verfahren, als Antwort auf einen empfangenen Fehlercode (DTC), umfasst
Kombinieren primärer Textinformation (txt1) betreffend den empfangenen Fehlercode (DTC) mit sekundärer Textinformation (txt2) betreffend den empfangenen Fehlercode (DTC), und folglich Kompilieren resultierender Textinformation (PDTI) betreffend den empfangenen Fehlercode (DTC).

11. Verfahren nach einem der Ansprüche 7 bis 10, umfassend
Ermitteln, ob ein empfangener Fehlercode (DTC) eine Ersatzkomponente (kₙ) in dem Fahrzeug (100) betrifft, wobei die Ersatzkomponente durch eine Steuereinheit (110, 130) gesteuert wird und Charakteristiken aufweist, die von einer originalen Komponente abweichen, wobei die Steuereinheit (110, 130) ausgebildet ist, die originale Komponente in Bezug auf mindestens einen Parameter zu steuern, wobei das Verfahren, wenn ein empfangener Fehlercode (DTC) so eine Ersatzkomponente (kₙ) betrifft, umfasst
Empfangen, von einer dritten Datenbank (DB3), mindestens eines zusätzlichen Details (suppl) betreffend die Ersatzkomponente (kₙ), und
Erzeugen diagnostischer Fehlerinformation (PDTI) betreffend den empfangenen Fehlercode (DTC), auf der zusätzlichen Basis des mindestens einen zusätzlichen Details (suppl).

12. Verfahren nach einem der Ansprüche 7 bis 11, umfassend
Empfangen eines Benutzerbefehls (cdm_{DTC}), der einen bestimmten empfangenen Fehlercode (DTC) hervorhebt, und als Antwort darauf
dynamisches Erzeugen der diagnostischen Fehlerinformation (PDTI) betreffend den hervorgehobenen Fehlercode (DTC).

13. Computerprogramm, das direkt auf den internen Speicher (M) eines Computers heruntergeladen werden kann und Sofware umfasst, zum Ausführen der Schritte nach einem der Ansprüche 7 bis 12, wenn das Programm auf dem Computer läuft.

14. Computerlesbares Medium (M), auf welchem ein Computerprogramm nach Anspruch 13 gespeichert ist.

## Revendications

1. Système de fourniture, via une interface de sortie (157), d'informations de diagnostic de panne (PDTI) concernant un véhicule à moteur (100), lequel système comprend une première unité de traitement (153) configurée pour recevoir des codes de panne (DTC) en provenance du véhicule (100), chaque code de panne (DTC) reçu étant associé à une identité unique et étant généré par une unité de commande (110, 130) dont le véhicule (100) est déjà pourvu et dont la fonction est au moins partiellement implémentée par un logiciel (SW) respectif, **caractérisé en ce que**
le système comprend une première base de données (DB1) comprenant une gamme d'éléments d'information, dans laquelle un certain élément d'information décrit comment l'unité de commande (110, 130) qui a émis un code de panne (DTC) donné réagit lorsque ce code de panne (DTC) a été généré,
le système comprend une deuxième base de données (DB2, DB2') incluant des données obtenues directement desdits logiciels respectifs (SW), et
la première unité de traitement (153) est configurée pour générer des informations de diagnostic de panne (PDTI) concernant un certain code de panne (DTC) reçu, dynamiquement en fonction du contenu de la première base de données (DB1) et du contenu de la deuxième base de données (DB2, DB2').

2. Système selon la revendication 1, comprenant une deuxième unité de traitement (155) configurée pour rechercher à travers lesdites données de la deuxième base de données (DB2, DB2') et générer en fonction de cette recherche des informations textuelles secondaires (txt2) qui décrivent la fonction d'au moins un logiciel (SW) du véhicule (100).

3. Système selon la revendication 2, dans lequel la deuxième unité de traitement (155) est configurée pour générer les informations textuelles secondaires (txt2) en réponse à un code de panne (DTC) reçu.

4. Système selon la revendication 2 ou 3, dans lequel les éléments d'information de la première base de données (DB1) comprennent des informations textuelles primaires (txt1) qui, pour chacun des codes de panne (DTC), décrivent comment l'unité de commande (110, 130) qui a émis le code de panne (DTC) réagit lorsque ce code de panne (DTC) a été généré ; et en réponse à un code de panne (DTC) reçu, la première unité de traitement (153) est configurée pour combiner des informations textuelles primaires (txt1) concernant le code de panne (DTC) reçu avec des informations textuelles secondaires (txt2) concernant le code de panne (DTC) reçu, et ainsi compiler des informations textuelles résultantes (PDTI) qui décrivent le code de panne (DTC) reçu.

5. Système selon l'une quelconque des revendications précédentes, comprenant en outre une troisième base de données (DB3) incluant au moins un détail additionnel (suppl) concernant un composant de remplacement (kₙ) présent dans le véhicule (100), lequel composant de remplacement est commandé par une unité de commande (110, 130) et a des caractéristiques différentes de celles d'un composant d'origine que ladite unité de commande (110, 130) est adaptée pour commander relativement à au moins un paramètre, et si, dans ce cas, un code de panne (DTC) reçu concerne ledit composant de remplacement (kₙ), la première unité de traitement (153) est configurée pour générer des informations de diagnostic de panne (PDTI) concernant le code de panne (DTC) reçu, en fonction en outre dudit au moins un détail additionnel (suppl) provenant de la troisième base de données (DB3).

6. Système selon l'une quelconque des revendications précédentes, dans lequel la première unité de traitement (153) est configurée pour
recevoir une commande utilisateur (cmd_{DTC}) désignant un certain code de panne (DTC) reçu, et en réponse à celle-ci
générer dynamiquement les informations de diagnostic de panne (PDTI) concernant le code de panne (DTC) désigné.

7. Procédé de fourniture, via une interface de sortie (157), d'informations de diagnostic de panne (PDTI) concernant un véhicule à moteur (100), lequel procédé comprend :
la réception de codes de panne (DTC) en provenance du véhicule (100), chaque code de panne (DTC) reçu étant associé à une identité unique et étant généré par une unité de commande (110, 130) dont le véhicule (100) est déjà pourvu et dont la fonction est au moins partiellement implémentée par un logiciel (SW) respectif, **caractérisé par**
la réception en provenance d'une première base de données (DB1) d'au moins un élément d'information décrivant comment l'unité de commande (110, 130) qui a émis un code de panne (DTC) reçu réagit lorsque ce code de panne (DTC) a été généré,
la réception en provenance d'une deuxième base de données (DB2) d'informations représentant le logiciel (SW) qui implémente l'unité de commande (110, 130) qui a généré le code de panne (DTC) reçu, et
la génération d'informations de diagnostic de panne (PDTI) concernant le code de panne (DTC) reçu, dynamiquement en fonction dudit au moins un élément d'information et desdites informations représentant le logiciel (SW).

8. Procédé selon la revendication 7, comprenant
la recherche à travers les copies logicielles (SW) dans la deuxième base de données (DB2) et, en fonction de cette recherche,
la génération d'informations textuelles secondaires (txt2) décrivant la fonction d'au moins une copie logicielle (SW) qui est stockée dans la deuxième base de données (DB2).

9. Procédé selon la revendication 8, dans lequel la recherche à travers lesdites copies logicielles (SW) et la génération des informations textuelles secondaires (txt2) ont lieu en réponse à un code de panne (DTC) reçu.

10. Procédé selon la revendication 8 ou 9, dans lequel les éléments d'information dans la première base de données (DB1) comprennent des informations textuelles primaires (txt1) qui, pour chacun des codes de panne (DTC), décrivent comment l'unité de commande (110, 130) qui a émis le code de panne (DTC) réagit lorsque le code de panne (DTC) respectif a été généré, lequel procédé, en réponse à un code de panne (DTC) reçu, comprend
la combinaison d'informations textuelles primaires (txt1) concernant le code de panne (DTC) reçu avec des informations textuelles secondaires (txt2) concernant le code de panne (DTC) reçu, et ainsi la compilation d'informations textuelles résultantes (PDTI) qui décrivent le code de panne (DTC) reçu.

11. Procédé selon l'une quelconque des revendications 7 à 10, comprenant
l'examen du fait qu'un code de panne (DTC) reçu concerne ou non un composant de remplacement (kₙ) présent dans le véhicule (100), lequel composant de remplacement est commandé par une unité de commande (110, 130) et a des caractéristiques différentes de celles d'un composant d'origine que ladite unité de commande (110, 130) est adaptée pour commander relativement à au moins un paramètre, lequel procédé, si un code de panne (DTC) reçu concerne un tel composant de remplacement (kₙ), comprend
la réception, en provenance d'une troisième base de données (DB3), d'au moins un détail additionnel (suppl) concernant le composant de remplacement (kₙ), et
la génération d'informations de diagnostic de panne (PDTI) concernant le code de panne (DTC) reçu, en fonction en outre dudit au moins un détail additionnel (suppl).

12. Procédé selon l'une quelconque des revendications 7 à 11, comprenant
la réception d'une commande utilisateur (cmd_{DTC}) qui désigne un certain code de panne (DTC) reçu, et en réponse à celle-ci
la génération dynamique d'informations de diagnostic de panne (PDTI) concernant le code de panne (DTC) désigné.

13. Programme informatique téléchargeable directement dans la mémoire interne (M) d'un ordinateur et comprenant un logiciel permettant la mise en oeuvre des étapes selon l'une quelconque des revendications 7 à 12 lorsque ledit programme est exécuté sur l'ordinateur.

14. Support lisible par un ordinateur (M), sur lequel est stocké un programme informatique selon la revendication 13.
